# NEUE EUROPÄISCHE PATENTSCHRIFT

(11) **EP 0 387 717 B2**
(45) Veröffentlichungstag und Bekanntmachung des Hinweises auf die Entscheidung über den Einspruch: **10.11.1999**
(45) Hinweis auf die Patenterteilung: 09.08.1995
(21) Anmeldenummer: 90104514.6
(22) Anmeldetag: 09.03.1990
(51) Int. Cl.: C03B 13/00, C03B 25/093, C03B 35/24

(54) **Verfahren zur Herstellung eines Naturglasprofiles**
Process of forming of a profiled natural glass
Procédé de formation d'un verre naturel profilé

(30) Priorität: 16.03.1989 DE 3908716
(43) Veröffentlichungstag der Anmeldung: 19.09.1990
(73) Patentinhaber: GLASFABRIK LAMBERTS GMBH & CO. KG, D-95624 Wunsiedel (DE)
(72) Erfinder: Lamberts, Gert Ing., D-8592 Wunsiedel (DE)
(74) Vertreter: Flügel, Otto, Dipl.-Ing.

(56) Entgegenhaltungen:
- AT-B- 312 181
- AU-B- 406 932
- DE-A- 1 496 416
- DE-C- 626 941
- DE-C- 1 218 670
- JP-A- 1 051 339
- SOVIET INVENTIONS ILLUSTRA- TED, Sektion Ch, Woche E 11, 28. April 1982,DERWENT PUBLICATIONS LTD., London, L 01

## Beschreibung

Die Erfindung bezieht sich auf ein Verfahren zur Herstellung von Naturglasprofilen, die insbesondere flach mit U-förmigem Querschnitt ausgebildet sind. Derartige Profile werden im Hallenbau, bspw. aus vertikal angeordneten Profilen, zu Wänden zusammengesetzt oder auch für Schrägverglasungen im Dachbereich verwendet. Es handelt sich hier in erster Linie um flache U-förmige Profile, wobei andere Profilformen jedoch grundsätzlich auch in Betracht kommen. Mit den vorerwähnten U-förmigen Profilen kann man einschalige und doppelschalige Wände erstellen. Bei doppelschaligem Wandaufbau werden U-förmige Profile mit aufeinander zu gerichteten Schenkeln angeordnet.

Die Erfindung bezieht sich ferner auf eine Walzmaschine zur Herstellung von Naturglasprofilen, wie sie voranstehend beschrieben worden sind.

Die voranstehend beschriebenen flachen Profile werden grundsätzlich auf einer derartigen Walzmaschine hergestellt. Es handelt sich also um Gußglas oder Weißglas. Da bei der Herstellung auf derartigen Walzglasmaschinen die nach unten weisenden Auflageflächen der Profile bei Auftreffen auf wassergekühlte Rollen eine Art Abschreckung erfahren, kommt es zu Oberflächenstrukturierungen, die unregelmäßig ausgebildet sind, so daß eine glatte Oberfläche der Profile nicht erzielbar ist. Dies hat dazu geführt, daß man die Oberfläche der Profile bewußt mit einer Prägung strukturiert hat, um ein gleichmäßiges Muster zu erzielen. Derartig ausgebildete Profile sind zwar lichtdurchlässig aber nicht durchsichtig.

Die lichtdurchlässige aber nicht durchsichtige Ausführung der bislang hergestellten Profile mit zumindest einseitig vorgesehener Musterprägung hat dazu geführt, daß man in Bereichen, in denen man eine Durchblickbarkeit sicherstellen wollte, normale Fenster mit Rahmen und dgl. eingesetzt hat. Eine solche Vorgehensweise ist verhältnismäßig aufwendig und stört die Gesamtansicht der zusammengesetzten Fläche.

Aus dem Stand der Technik sind verschiedene Verfahren und Vorrichtungen zur Herstellung von Naturglasprofilen bekannt. Beispielsweise offenbart die AU-A-406932 ein Verfahren zur Herstellung von Flachglas, bei dem eine Lage geschmolzenes Glas einer Schmelze entnommen wird. Diese Glaslage wird in einer Vorrichtung gestreckt, wobei die als Glasband bezeichnete Glaslage von einem ersten horizontalen Weg angehoben wird. Hierzu wird ein Luftdruckkissen mit einem bestimmten Druck verwendet, um das Glasband von einer ersten horizontalen Lage in eine zweite im wesentlichen horizontalen Lage anzuheben. Es ist erkennbar, daß es sich bei diesem vorbekannte Verfahren nicht um ein Verfahren zur Herstellung von Naturglasprofilen handelt, bei dem ein entsprechend heißer Glasstrang einer Schmelze entnommen, einer Walzmaschine zugeführt und in dieser in einen Profilstrang oder dgl. gepreßt wird, wobei der der Schmelze entnommene Glasstrang vor seiner Zuführung in Formwerkzeuge über Luftzufuhreinrichtungen geführt und durch Druckluft abgekühlt wird, die aus den Luftzufuhreinrichtungen gegen die ihr zugewandte Oberfläche des Glasstranges strömt, so daß ein Kontakt zwischen dem Glasstrang und den Luftzufuhreinrichtungen vermieden wird.

Ferner ist aus der AT-B-312181 ein Verfahren zur kontinuierlichen Herstellung von Glas mit vorzugsweise bandförmigem Querschnitt bekannt. Bei diesem vorbekannten Verfahren wird Glas bei einer Viskosität von 10³ bis 10¹⁰ Poisen gestreckt, wobei das Glas während des Streckvorganges und im Streckbereich, in an sich bekannter Weise, mit einem fließfähigen Medium beaufschlagt wird, der Beaufschlagungsdruck 0,7 bis 6 Atü beträgt und das Medium an der Stelle der Druckbeaufschlagung mindestens angenähert die gleiche Temperatur aufweist wie das Glas. Das fließfähige Medium weist als feste Bestandteile wasserfreie Salze, vorzugsweise Kalium, Robidium oder Cäsium auf. Es ist auch bei diesem vorbekannten Verfahren zu erkennen, daß das fließfähige Medium weder zur Kühlung noch zum Anheben des Glasstranges dient. Vielmehr ist dieser Druckschrift zu entnehmen, daß die Erzielung besserer physikalischer Eigenschaften des Glases, insbesondere einer höheren Festigkeit, durch Streckung des Glases und durch Beaufschlagung desselben mit einem Druckmedium erreicht wird, ohne daß dabei das Glas wesentlich abgekühlt wird.

Der Erfindung liegt die Aufgabe zugrunde, U-förmiges Profilglas so herzustellen, daß zumindest durchsichtige Zonen solcher Wandungen bereitgestellt werden können, ohne herkömmliche Fensterkonstruktionen vornehmen zu müssen.

Gelöst wird diese Aufgabe erfindungsgemäß durch ein Verfahren gemäß dem Anspruch 1 bzw. gemäß dem Anspruch 2, wobei die Druckluft, die man auch als Kühlluft bezeichnen kann, das Flachglas vor der Verformung zum U-Profil mit einer nach oben gerichteten Kraftkomponente beaufschlagt, so daß der Glasstrang mit einer nach oben gerichteten Kraftkomponente beaufschlagt wird, und mit seiner Auflagefläche nicht mehr in Abschreckkontakt mit der ersten wassergekühlten Form werkzeugwalze oder der ersten wassergekühlten Transportrolle gelangt.

Durch den Luftdruck wird die Berührung zwischen der Unterfläsche des Glases und der gekühlten Walze oder Rolle verhindert, d.h. das Glasband schwebt über die Walze oder Rolle. Die Walze oder Rolle dient dann nur noch der Regulierung des Luftdruckes, denn bei weiterem Abheben des Glases von der Walze oder Rolle würde durch den wachsenden Spalt eine entsprechende Luftmenge entweichen, wodurch der Druck sinkt und das Glas demnach wieder in Richtung Walze oder Rolle gelangt.

Grundsätzlich wäre es daher denkbar, anstelle der Walze oder Rolle eine Luftbegrenzungskante beliebiger Art einzusetzen. Bevorzugt wird jedoch eine Rolle oder Walze eingesetzt, und zwar zum besseren Anfahren und aus Sicherheitsgründen. Außerdem hat die Verwendung von Walzen bzw. Rollen den Vorteil, daß man bestehende Anlagen umrüsten kann.

Ähnlich könnte man grundsätzlich dahin denken, diese Walzen bzw. Transportrollen nicht mehr zu kühlen, denn wenn das Glas mit ihnen nicht in Berührung kommt, wird die Kühlung zumindest zum großen Teil von der Luft übernommen. Bei Ausfall der Luft würde allerdings das Glas auf die ungekühlten Walzen gelangen und an diesen festkleben.

Aus Sicherheitsgründen wird man daher in bevorzugter Ausführung weiterhin gekühlte Walzen bzw. Rollen einsetzen.

Man wird demnach die Trag- bzw. Transportrollenbelastung dadurch abfangen, daß vor der ersten Rolle und gegebenenfalls auch zwischen darauffolgenden Rollen Luft eingeblasen wird, immer in der Absicht, die Auflagefläche des Glases nicht mit gekühlten Teilen der Anlage in Berührung zu bringen, und zwar zumindest über ein Teil des Weges, bis das Glas in das Formwerkzeug einläuft, in welchem das Profil ausgeformt wird. Zu diesem Zeitpunkt ist die obere Fläche des Glases bereits soweit abgekühlt, daß das früher auftretende Schrumpeln nicht mehr in Erscheinung tritt, sondern der Angriff des Formwerkzeuges die "Glattwandigkeit" der beim Formen abgestützten Auflagefläche des Glases nicht mehr beeinträchtigt.

In einer weiterhin bevorzugten Ausführung wird das Glas "gezogen", und zwar durch Antrieb der Formwalzen und nachgeschalteter Trag- oder Transportrollen, dabei wird insgesamt eine höhere Geschwindigkeit als bei der herkömmlichen Herstellung gefahren, und zwar vorzugsweise um ein Drittel höher. Dieses "Ziehen" des Glases durch die angetriebenen Rollen, insbesondere aber auch durch Antrieb der Transportrollen im Kühlofen, die etwas schneller drehen, wird eine Zugwirkung auf den Glasstrang ausgeübt. Auch durch dieses Ziehen ergibt sich während des Betriebs ein Zustand, in der die ersten Tragrollen an sich nicht vorhanden sein müssen, sondern die Transportstrecke bis zu den Formwerkzeugen mehr oder weniger durchgehend von Düsenkästen zur Erstellung eines entsprechenden Druckluftkissens gebildet wird.

Insgesamt wird eine insoweit glatte Oberfläche des Walzglases in Profilform auf beiden Seiten erreicht, daß das Glas durchsichtig ist. Hier bedarf es in aller Regel keiner Fensterglasqualität, sondern es soll die Möglichkeit des klaren und nicht nur verschwommenen Erkennens von Gegenständen auf der jeweils anderen Seite der Glaswand oder dergleichen gegeben sein.

Eine erfindungs gemäße Walzmaschine zur Durchführung der Verfahren gemaß den Ansprüchen 1 und 2 ist im Anspruch 7 definiert.

Die beiliegenden Zeichnungen zeigen zwei Ausführungsbeispiele einer Walzmaschine zur Durchführung des Verfahrens zum Herstellen von durchsichtigem Profilglas.

Es zeigen:
- Figur 1: eine Walzenmaschinenausführung mit Transportrollen zwischen den Einzugswalzen und den Formwerkzeugen;
- Figur 2: eine Walzmaschinenausführung ohne solche Transportrollen.

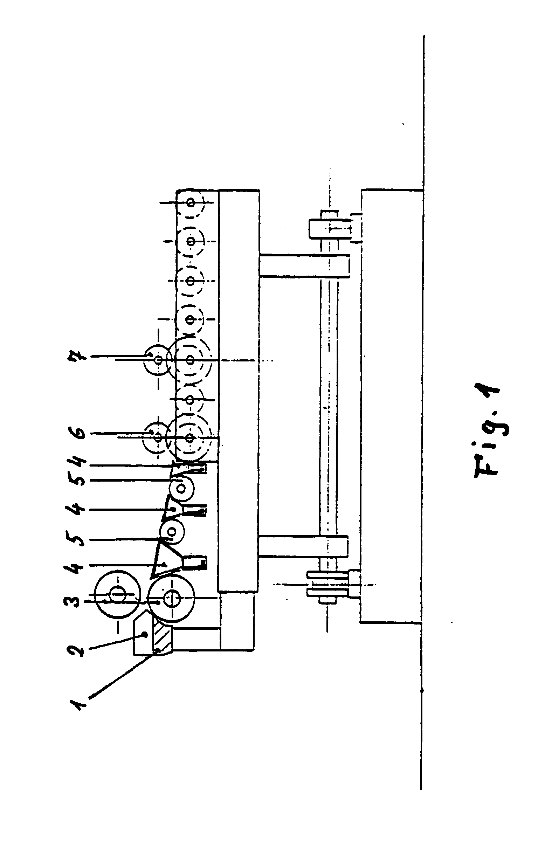

Über einen sogenannten Maschinenstein 1 wird der Walzmaschine entsprechend heißes Glas zugeführt, das über einen Begrenzungsstein 2 zwei übereinander angeordneten Einzugswalzen 3 zugeführt wird. Darauf folgen gemäß Fig. 1 gekühlte Transportrollen 5 unter Zwischenanordnung von Düsenkästen 4 für die Zuführung von Kühlender Druckluft, die demnach auf die nach unten gerichtete Fläche des nicht dargestellten, noch flachen Glasstranges gerichtet sind. Der sich kontinuierlich über die Transportrollen auf die Formwerkzeuge 6 und 7 - 6 ist ein Vorverformzeug, 7 ein Verformwerkzeug - zu bewegende Glasstrang wird durch die Druckluft angehoben, so daß er keinen unmittelbaren Kontakt mit den gekühlten Transportrollen 5 erfährt. Dadurch wird verhindert, daß eine plötzliche Abkühlung durch Berührungskontakt, ein sogenanntes Abschrecken der den Transportrollen zugewandten Glasoberfläche, auftritt, das zu einem Schrumpeln führen würde.

Bei Einlauf in die Formwerkzeuge 6 und 7 ist der Glasstrang soweit abgekühlt, daß ein Berühren mit den Formwerkzeug 6 und 7 zu keiner Beeinträchtigung der Oberfläche des nunmehr zu einem U-Profil zu verformenden Glasstranges mehr führt.

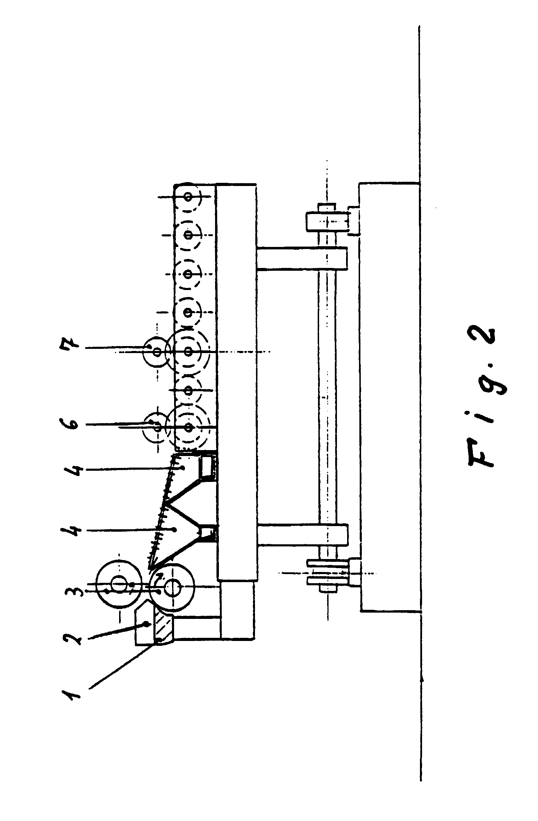

In der Ausführung gemäß Fig. 2 weist die entsprechende Walzmaschine zwischen den Einzugswalzen 3 und dem Vorformwerkzeug 6 keine Transportwalzen, sondern ausschließlich zum Glasstrang hin gerichtete Luftpolster erzeugende Düseneinrichtungen auf, im Falle dieses Beispieles zwei Düsenkästen 4. Das zeigt deutlich, daß der nicht dargestellte Glasstrang über diese Strecke hinweg - bis zu einer Abkühlung also, die den Angriff der Formwerkzeuge 6 und 7 ohne prägende Beeinträchtigung der Glasstrangoberfläche erlaubt - ausschließlich von der Luftströmung der Düsenkästen 4 abgestützt verläuft.

## Patentansprüche

1. Verfahren zur Herstellung von Naturglasprofilen, bei dem ein entsprechend heißer Glasstrang einer Schmelze entnommen, einer Walzmaschine zugeführt und in dieser in einen Profilstrang oder dgl. gepreßt wird, wobei der der Schmelze entnommene Glasstrang vor seiner Zuführung in Formwerkzeuge (6, 7) über Luftzufuhreinrichtungen (4) geführt und durch Druckluft abgekühlt wird, die aus den Luftzufuhreinrichtungen (4) gegen die den Luftzufuhreinrichtungen Zugewandte Oberfläche des Glasstranges strömt, so daß der Glasstrang hier mit einer nach oben gerichteten Kraftkomponente beaufschlagt wird, und mit seiner Auflagefläche nicht mehr in Abschreckkontakt mit der ersten wassergekühlten Formwerkzeugwalze gelangt.

2. Verfahren zur Herstellung von Naturglasprofilen, bei dem ein entsprechend heißer Glasstrang einer Schmelze entnommen, einer Walzmaschine zugeführt und in dieser in einen Profilstrang oder dgl. gepreßt wird, wobei der der Schmelze entnommene Glasstrang vor seiner Zuführung in Formwerkzeuge (6, 7) über Luftzufuhreinrichtungen (4) und Transportrollen (5) geführt und durch Druckluft abgekühlt wird, die aus den Luftzufuhreinrichtungen (4) gegen die den Luftzufuhreinrichtungen (4) zugewandte Oberfläche des Glasstranges strömt, so daß der Glasstrang hier mit einer nach oben gerichteten Kraftkomponente beaufschlagt wird, und mit seiner Auflagefläche nicht mehr in Abschreckkontakt mit der ersten wassergekühlten Transportrolle gelangt.

3. Verfahren nach Anspruch 2,
**dadurch gekennzeichnet**,
daß die kühlende Druckluft vor und zwischen den Transportrollen (5) in Transportrichtung gesehen eingeblasen wird.

4. Verfahren nach Anspruch 1 oder 2,
**dadurch gekennzeichnet**,
daß die kühlende Druckluft über die gesamte, von Abstützungen freie Strecke in Transportrichtung bis zu den Formwerkzeugen (6, 7) zugeführt wird.

5. Verfahren nach einem der Ansprüche 1 bis 4,
**dadurch gekennzeichnet**,
daß der Luftdruck so hoch gewählt wird, daß die Auflagefläche des Glasstranges die wassergekühlte Formwerkzeugwalze oder Transportrolle (5) nicht mehr berührt, wobei Druckluft durch den Spalt zwischen der Auflagefläche des Glasstranges und der Formwerkzeugwalze oder Transportrolle (5) entweicht.

6. Verfahren nach einem der Ansprüche 1 bis 5,
**dadurch gekennzeichnet**,
daß der Glasstrang durch angetriebene Rollen gezogen wird, insbesondere durch einen Antrieb von Rollen im Bereich einer beheizten Kühlzone.

7. Walzmaschine zur Durchführung des Verfahrens nach einem der Ansprüche 1 bis 6 zur Herstellung von Naturglasprofilen mit einer Zuführeinrichtung (1, 2, 3) für die Zufuhr eines einer Schmelze entnommenen Glasstranges, mit einer Förderstrecke, zumindest einem in die Förderstrecke integrierten Formwerkzeug (6, 7) und mit einer Glasstrangkühlung, die dem Formwerkzeug (6, 7) vorgeschaltet ist, wobei im Bereich der Glasstrangkühlung eine oder mehrere Luftzufuhreinrichtungen (4) angeordnet sind, die kühlende Druckluft gegen die den Luftzufuhreinrichtungen (4) zugewandte Oberfläche des Glasstranges derart blasen, daß der Glasstrang hier mit einer nach oben gerichteten Kraftkomponente beaufschlagt wird und mit seiner Auflagefläche nicht mehr in Abschreckkontakt mit der ersten wassergekühlten Formwertzeugwalze (6) bzw. der ersten Wassergekühlten Transportrolle (5) gelangt, und zwar solange, bis das Glas in das Formwertzeug einläuft.

8. Walzmaschine nach Anspruch 7,
**dadurch gekennzeichnet**,
daß zwischen den Luftzufuhreinrichtungen (4) gekühlte Walzen bzw. Transportrollen (5) angeordnet sind.

9. Walzmaschine nach Anspruch 8,
**dadurch gekennzeichnet**,
daß die Kühlluft den Strang von abgekühlten Abstützeinrichtungen wie Transportrollen (5) abhebt.

## Claims

1. A process for preparing natural glass sections, in which a hot strand of glass is taken from a melt, supplied to a rolling machine and compressed therein to form a profiled strand or the like, in which the glass strand taken from the melt, before delivery thereof into moulding tools (6, 7), is guided over air supply devices (4) and cooled by compressed air which flows from the air supply devices (4) towards the surface of the glass strand facing the air supply devices, so that the glass strand is here acted upon by an upwardly directed force component and its bearing surface no longer comes into quenching contact with the first water-cooled moulding tool roll.

2. A process for producing natural glass sections, in which a hot strand of glass is taken from a melt, supplied to a rolling machine and compressed therein to form a profiled strand or the like, in which the strand of glass taken from the melt, before delivery thereof to moulding tools (6, 7), is guided over air supply devices (4)and conveyor rolls (5) and cooled by compressed air which flows from the air supply devices (4) towards the surface of the glass strand facing the air supply devices (4), so that the glass strand is here acted upon by an upwardly directed force component and its bearing surface no longer comes into quenching contact with the first water-cooled conveyor roll.

3. A process according to claim 2, characterised in that the cooling compressed air is blown in in front of and between the conveyor rolls (5), viewed in the direction of transport.

4. A process according to claim 1 or 2, characterised in that the cooling compressed air is supplied to the moulding tools (6, 7) over the entire path free from supports, in the direction of transport.

5. A process according to one of claims 1 to 4, characterised in that the level of the air pressure is chosen such that the bearing surface of the glass strand no longer touches the water-cooled moulding roll or conveyor roll (5), whilst the compressed air escapes through the gap between the bearing surface of the glass strand and the moulding roll or conveyor roll (5).

6. A process according to one of claims 1 to 5, characterised in that the glass strand is pulled through driven rolls, more particularly through a drive of rolls within the region of a heated cooling zone.

7. A rolling machine for carrying out the process for producing natural glass sections, comprising a delivery device (1, 2, 3) for supplying a glass strand taken from a melt, comprising a conveying track, at least one moulding tool (6, 7) integrated in the conveying track, and a glass strand cooling device connected upstream of the moulding tool (6, 7), wherein one or more air supply means (4) are arranged within the region of the glass strand cooling means, which air supply means blow cooling compressed air against the surface of the glass strand facing the air supply means (4) in such a manner that the glass strand is here acted upon by an upwardly directed force component and its bearing surface no longer comes into quenching contact with the first water-cooled moulding tool roll (6) or the first water-cooled conveyor roll (5), namely so long until the glass enters in the moulding tool.

8. A rolling machine according to claim 7, characterised in that cooled rolls or conveyor rolls (5) arc arranged between the air supply means (4).

9. A rolling machine according to claim 8, characterised in that the cooled air lifts the strand off the cooled support means such as conveyor rolls (5).

## Revendications

1. Procédé de fabrication de profilés en verre naturel, selon lequel on extrait un cordon de verre chaud d'un bain pour alimenter un laminoir et le presser dans celui-ci suivant un cordon profilé ou analogue, le cordon de verre extrait du bain étant conduit avant son introduction dans les outils de formage (6, 7) pardessus des installations d'alimentation en air (4) pour être refroidi par l'air comprimé dirigé par les installations d'alimentation en air (4) contre la surface du cordon de verre tournée vers ces installations en air, pour que le cordon de verre soit sollicité ici par une composante de force dirigée vers le haut et n'arrive plus en contact de refroidissement brusque par sa surface d'appui avec le premier cylindre de formage refroidi par de l'eau.

2. Procédé de fabrication de profilés en verre naturel selon lequel on extrait un cordon de verre chaud d'un bain pour alimenter un laminoir et le presser dans celui-ci sous la forme d'un cordon profilé ou analogue, le cordon de verre extrait du bain étant conduit avant son alimentation des outils de formage (6, 7) pardessus des installations d'alimentation en air (4) et des rouleaux de transport (5) pour être refroidi par de l'air comprimé soufflé par les installations d'alimentation en air (4) contre la surface du cordon de verre tournée vers les installations d'alimentation en air (4), pour que le cordon de verre soit soumis ici à une composante de force dirigée vers le haut et que sa surface d'appui n'arrive plus en contact de refroidissement brusque avec le premier rouleau de transport refroidi avec de l'eau.

3. Procédé selon la revendication 2 caractérisé en ce qua l'air comprimé à refroidir est soufflé en amont des rouleaux de transport (5) et entre ceux-ci, selon le sens du transport.

4. Procédé selon la revendication 1 ou 2, caractérisé en ce que l'air comprimé de refroidissement est fourni sur tout le chemin libre d'appui, pris dans la direction de transport, jusqu'aux outils de formage (6, 7).

5. Procédé selon l'une des revendications 1 à 4, caractérisé en ce qu'on choisit le niveau de la pression de l'air pour que la surface d'appui du cordon de verre ne touche plus le cylindre de formage ou le rouleau de transport (5) refroidis par de l'eau, l'air comprimé s'échappant à travers l'intervalle entre la surface d'appui du cordon de verre et le cylindre de formage ou le rouleau de transport (5).

6. Procédé selon l'une des revendications 1 à 5, caractérisé en ce que le cordon de verre est tiré par des rouleaux ou cylindres entraînés, notamment par un entraînement de rouleaux au niveau d'une zone de refroidissement chauffée.

7. Laminoir pour la mise en oeuvre d'un procédé pour la fabrication de profilés en verre naturel comportant une installation d'alimentation (1, 2, 3) pour fournir un cordon de verre pris dans un bain, un chemin de transfert à au moins un outil de formage (6, 7) intégré au chemin de transfert et un refroidissement du cordon de verre qui se trouve en amont de l'outil de formage (6, 7), et au niveau de refroidissement du cordon de verre, il y a une ou plusieurs installations d'alimentation en air (4) qui soufflent l'air comprimé de refroidissement contre la surface du cordon de verre tournée vers les installations d'alimentation en air (4) d'une telle manière que le cordon de verre soit soumis ici à une composante de force dirigée vers le haut et que sa surface d'appui n'arrive plus en contact de refroidissement brusque avec le premier rouleau de transport refroidi avec de l'eau (6) ou le premier rouleau de transport refroidi avec de l'eau (5), et même aussi longtemps que le verre entre dans l'outil de formage.

8. Laminoir selon la revendication 7, caractérisé en ce que entre les installations d'alimentation en air (4), il y a des cylindres ou des rouleaux de transport (5).

9. Laminoir selon la revendication 8, caractérisé en ce que l'air de refroidissement soulève le cordon des installations d'appui, refroidies, telles que les rouleaux de transport (5).
